(19) Europäisches Patentamt
European Patent Office
Office européen des brevets

(11) **EP 4 607 935 A1**

(12) **EUROPEAN PATENT APPLICATION**
published in accordance with Art. 153(4) EPC

(43) Date of publication:
**27.08.2025 Bulletin 2025/35**

(21) Application number: **23878696.6**

(22) Date of filing: **29.06.2023**

(51) International Patent Classification (IPC):
**H04N 23/60** (2023.01)

(52) Cooperative Patent Classification (CPC):
**H04N 23/60**

(86) International application number:
**PCT/CN2023/103718**

(87) International publication number:
**WO 2024/082699 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.10.2022 CN 202211287250**

(71) Applicant: **Hangzhou Microimage Software Co.,
Ltd.
Hangzhou, Zhejiang 310051 (CN)**

(72) Inventors:
• **KANG, Le
Hangzhou, Zhejiang 310051 (CN)**
• **YANG, Minming
Hangzhou, Zhejiang 310051 (CN)**

(74) Representative: **Epping - Hermann - Fischer
Patentanwaltsgesellschaft mbH
Schloßschmidstraße 5
80639 München (DE)**

(54) **FOCUSING APPARATUS AND METHOD, AND ELECTRONIC DEVICE**

(57)    Embodiments of the present application provide a focusing apparatus and method, and an electronic device, which are applicable to the technical field of information. The focusing apparatus comprises a lens, a control module and a driving module. The control module is used for acquiring attribute information of the lens; determining a target travel range of the driving module according to the attribute information, wherein the target travel range is smaller than the total travel range of the driving module; and controlling the driving module to advance in the target travel range so as to drive the lens or a sensor to move, so that focusing is realized. According to the solution of the present application, the control module acquires the attribute information of the lens, determines the target travel range of the corresponding driving module according to the attribute information of the lens, and thus controls the driving module to advance in the target travel range to drive the lens or the sensor to move to implement focusing. Because the target travel range is smaller than the total travel range of the driving module, a moving range of the driving module is reduced in the focusing process, and the focusing efficiency is improved.

Fig. 1

## Description

The present application claims the priority to a Chinese patent application No. 202211287250.9 filed with the China National Intellectual Property Administration (CNIPA) on October 20, 2022 and entitled "FOCUSING APPARATUS AND METHOD, AND ELECTRONIC DEVICE", which is incorporated herein by reference in its entirety.

## Technical Field

The present application relates to the field of information technology, in particular to a focusing apparatus and method, and an electronic device.

## Background

Currently, power focusing apparatus is widely used. The power focusing apparatus consisted of a focus adjusting lens, a focus adjusting mechanism, a driving circuit, and a controller, can automatically adjust a motor position through the controller controlling a driving motor, so as to determine the clearest image.

However, the current power focusing apparatus tend to perform focusing at each position one by one within a focusing range of the lens and check focusing results during focusing to identify a optimal focusing position, so that the focusing efficiency is low.

## Summary

An object of embodiments of the present application is to provide a focusing apparatus and method, and an electronic device for solving a problem of low focusing efficiency in the known focusing apparatus. Detailed technical solutions are as follows:

A first aspect of an embodiment of the present application provides a focusing apparatus including a lens, a control module, and a driving module;

wherein the control module is configured for acquiring attribute information of the lens; determining, a target travel range of the driving module according to the attribute information, wherein the target travel range is smaller than a total travel range of the driving module; and controlling the driving module to travel within the target travel range to drive the lens or a sensor to move, so as to realize focusing.

A second aspect of an embodiment of the present application provides a focusing method, which is applied to a control module in a focusing apparatus, wherein the focusing apparatus further includes a lens and a driving module;
the method includes:

acquiring attribute information of the lens;

determining a target travel range of the driving module according to the attribute information, wherein the target travel range is smaller than a total travel range of the driving module;

controlling the driving module to travel within the target travel range to drive the lens or a sensor to move, so as to realize focusing.

Another aspect of an embodiment of the present application provides an electronic device including a processor and a memory; wherein

the memory is configured for storing a computer program;

the processor is configured for implementing any step of the above method when executing the computer program stored in the memory.

Another aspect of an embodiment of the present application provides a computer readable storage medium, which stores a computer program stored thereon, which when executed by the processor, implement any step of the above focusing method.

An embodiment of the present application further provides a computer program product containing instructions, which, when running on a computer, cause the computer to carry out any one of the focusing methods described above.

Beneficial effects of the embodiments of the present application are as follows:
Embodiments of the present application provide a focusing apparatus and method, an electronic device, and a storage medium, the focusing apparatus includes a lens, a control module and a driving module; the control module is configured for acquiring attribute information of the lens; determining a target travel range of the driving module according to the attribute information, wherein the target travel range is smaller than a total travel range of the driving module; and controlling the driving module to travel within the target travel range to drive the lens or a sensor to move so as to realize focusing. With solutions of the embodiments of the present application, the control module acquires the attribute information of the lens, determines the corresponding target travel range of the driving module according to the attribute information of the lens, and thus controls the driving module to travel within the target travel range to drive the lens or the sensor to move, so that focusing is realized. Since the driving module moves only within the target travel range instead of within its overall total travel range and the target travel range is smaller than the total travel range of the driving module, a moving range of the driving module is reduced during focusing, and the focusing efficiency is improved.

Of course, it is not necessary for any product or method implementing the present application to achieve all the advantages described above simultaneously.

## Brief Description of the Drawings

The drawings described here are intended to provide further understandings of the present application and to constitute a part of the same. The illustrative embodiments of the present application and their descriptions are intended to explain the present application and do not constitute an improper limitation of this application.

Fig. 1 is a schematic diagram of a structure of a focusing apparatus provided by an embodiment of the present application;

Fig. 2 is a schematic diagram of another structure of a focusing apparatus provided by an embodiment of the present application;

Fig. 3 is a schematic diagram of yet another structure of a focusing apparatus provided by an embodiment of the present application;

Fig. 4 is a schematic flow chart for ranging provided by an embodiment of the present application;

Fig. 5 is a schematic diagram of compensation for the return travel range difference provided by an embodiment of the present application;

Fig. 6 is a schematic flow chart of a focusing method provided by an embodiment of the present application;

Fig. 7 is a schematic diagram of a structure of an electronic device provided by an embodiment of the present application.

## Detailed Description

In order to make the objective, technical solutions and advantages of the present application clearer and more understandable, the present application will be described in more detail below with reference to the accompanying drawings and embodiments. Obviously, the described embodiments are only some, and not all, of the embodiments of the present application. All other embodiments obtained based on the embodiments of the present application by those skilled in the art fall into the scope of protection of the present application.

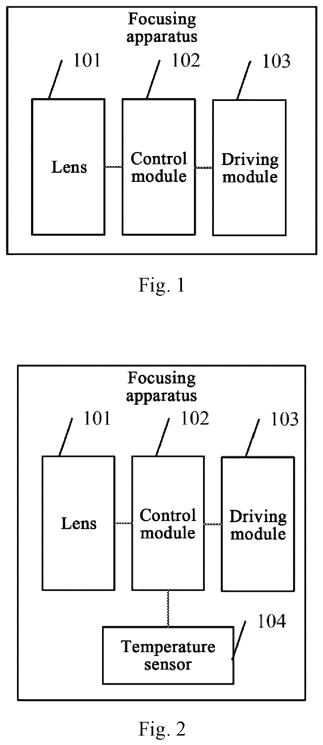

A first aspect of an embodiment of the present application provides a focusing apparatus (see Fig. 1) which includes a lens 101, a control module 102, and a driving module 103.

The control module 102 is configured for acquiring attribute information of the lens; determining a target travel range of the driving module according to the attribute information, wherein the target travel range is smaller than a total travel range of the driving module; and controlling the driving module to travel within the target travel range to drive the lens or a sensor to move, so that focusing is realized.

Specifically, the focusing apparatus in the embodiment of the present application may refer to an apparatus with a focusing function, such as a video camera, a camera, a web cam, etc. This focusing apparatus can control a movement of a driving module and use the driving module to drive a sensor or a lens to move, so as to change a distance between the lens and the sensor so as to realize focusing.

Wherein, the control module can acquire the attribute information of the lens in multiple ways. In one example, a user can input the attribute information of the lens, and the control module can receive information input by the user, so that the attribute information of the lens can be obtained. In another example, the control module can pre-store attribute information corresponding to multiple types of lenses, the control module then identifies a feature of the present lens, and thus determines attribute information of the present lens according to the feature and the pre-stored attribute information corresponding to the multiple types of lenses, for example, the feature can be the size of the lens. In yet another example, the lens may have built-in attribute information thereof, and the control module can read the built-in attribute information in the lens.

In one possible implementation, the lens has built-in attribute information thereof, and is in communication connection with the control module; the control model 102 is specifically configured for acquiring the attribute information of the lens via the communication connection. For example, the lens may include a memory module in which the attribute information of the lens can be stored, the control module can read the attribute information via the communication connection between the control module and the lens. For example, the lens may have a built-in single-chip microcomputer or a built-in memory chip and the like, in which the attribute information of the lens can be stored. There may be various types of connections between the lens and the control module, for example, the lens can be provided with a contact, by which the control module can be in communication connection with the lens and read the attribute information of the lens after the lens being installed.

The attribute information of the lens in the embodiment of the present application may include information of the lens, such as type, focal length, model, focusing range. For example, during acquiring the attribute information of the lens, at least one piece of the following information may be acquired: the type of the lens such as long-focus lens or short-focus lens; the focusing range such as 10-1000m, 0.5-10m, etc.; and the brand and the model of the lens, as well as other information. The target travel range of the driving module corresponding to the current lens is then determined through pre-created attribute information and a travel range of the driving module. The driving module is thus controlled to travel within the target travel range so as to drive the lens or a sensor to move, so that focusing is realized.

The driving module in the embodiment of the present application can be controlled through the control module. Specifically, the driving module can drive the lens or the sensor to travel. In one example, the driving module may be a motor. In practical use, if an initial position of the driving module is just not within a target focus adjusting range when the lens is driven by the driving module, the control module can control the driving module to move into a target travel range and travel within the target travel range. At the end of focusing, the driving module would still stop within the target travel range and will not return to the initial position which is beyond the target travel range.

The lens may be replaced in practical use. And after replacing the lens, the solution provided by the present application can acquire attribute information of a lens after the replacement and determine the target travel range of the driving module according to the attribute information and control the driving module to travel within the target travel range to drive the lens or the sensor to move, so that focusing is realized. Since the target travel range is smaller than the total travel range of the driving module, the driving module can travel in a smaller range, so that focusing speed is increased while the loss of the driving module is reduced. The specific solution for determining the target travel range can refer to the description of other embodiments in this application, and will not be repeated here. In one example, focus adjusting ranges of the multiple lenses for the replacement can vary, but the focus adjusting ranges of the lenses can partially overlap. For example, the control module can read the attribute information of the lens, such as the focus adjusting range of the lens, via the communication connection with the lens, and determine the target travel range corresponding to the driving module according to a correspondence between the focus adjusting ranges and the travel ranges of the driving module. For example, the target travel range is 1.5-3mm, and then the driving module is controlled to travel within the target travel range according to the determined target travel range. For example, lens 1 and lens 2 are premeasured, and focus adjusting ranges corresponding to the lens 1 and lens 2 are 1-5m and 3-10m, respectively. When a current lens is determined as lens 2 based on the acquired attribute information of the lens, the focus adjusting range corresponding to the lens 2 is determined as 3-10m, and then the corresponding target travel range of the driving module is determined according to the focus adjusting range.

It can be seen that through the apparatus of embodiments of the present application, the attribute information of the lens can be acquired by the control module, the corresponding target travel range of the driving module is determined according to the attribute information of the lens, and thus the driving module is controlled to travel within the target travel range to drive the lens or the sensor to move, so that focusing is realized. Since the driving module travels only within the target travel range instead of moving within the overall total travel range thereof and the target travel range is smaller than the total travel range of the driving module, a moving range of the driving module is reduced in the focusing process, and the focusing efficiency is improved.

In embodiments of the present application, the control module may determine the target travel range of the driving module according to the attribute information of the lens with various methods.

In a possible implementation, the attribute information of the lens includes a target focus adjusting range of the lens;
the control module 102 is specifically configured for determining the target travel range of the driving module according to the target focus adjusting range of the lens in the attribute information, wherein the target focus adjusting range of the lens corresponds to the target travel range of the driving module.

In a possible implementation, the attribute information of the lens includes a focus length of the lens; the control module 102 is specifically configured for determining a target focus adjusting range corresponding to the focal length of the lens according to the attribute information of the lens and a first correspondence, wherein the first correspondence is a predetermined correspondence between focal lengths and focus adjusting ranges; determining the target travel range of the driving module corresponding to the target focus adjusting range according to a second correspondence, wherein the second correspondence is a correspondence between lens focus adjusting ranges and travel ranges of driving modules.

In a possible implementation, the attribute information of the lens includes the target travel range of the driving module;
the control module 102 is specifically configured for identifying the attribute information of the lens to obtain the target travel range of the driving module.

Specifically, a correspondence between the focus adjusting ranges of the lens and the travel ranges of the driving module can be pre-created when determining the target travel range of the driving module according to the target focus adjusting range of the lens in attribute information, while after acquiring the target focus adjusting range of the lens, a target travel range of a current driving module corresponding to a target focus adjusting range of a current lens can be obtained by matching the acquired focus adjusting range in the correspondence. For example, a travel range of 1.5-3mm of the driving module corresponding to a focus adjusting range of 0.5-10m of the lens, and a travel range of 2-5.5mm of the driving module corresponding to a focus adjusting range of 50-100m of the lens are pre-created. After the focus adjusting range of the lens is obtained as 0.5-10m by acquiring the attribute information of the lens, the target travel range of the driving module can be determined as 1.5-3mm directly based on the focus adjusting range.

Specifically, before determining the target focus adjusting range corresponding to the focal length of the lens according to the attribute information of the lens and a first correspondence, the first correspondence between focal lengths and focus adjusting ranges can be predetermined.

Specifically, the focal length of lens in embodiments of the present application may be fixed or variable consecutively.

Wherein, the focal length for a prime lens is fixed. A first correspondence between the focal length and focus adjusting range is predetermined, for example, a focal length of a prime lens 1 is 10mm, a corresponding focus adjusting range is 0.5-30m; a focal length of a prime lens 2 is 25mm, a corresponding focusing range is 4-100m, so that the target focus adjusting range corresponding to the focal length of the lens is determined according to the attribute information of the lens and the first correspondence. In practical use, a correspondence between lens focus adjusting ranges and driving module travel ranges can be predetermined. For example, the focus adjusting range corresponding to the focal length of 10mm of the prime lens 1 is 0.5-30m, a travel range of the driving module corresponding to the focus adjusting range of this prime lens 1 is 1-2mm; the focusing range corresponding to the focal length of 25mm of the prime lens 2 is 4-100m, a travel range of the driving module corresponding to the focus adjusting range of this prime lens 2 is 2-4mm.

Wherein, for a zoom lens, a focal length thereof can vary consecutively in a range. A first correspondence between focal lengths and focus adjusting ranges is predetermined, for example, a focal length of a zoom lens 1 is 3-10mm, a focus adjusting range corresponding to this focal length is 0.1-30m; a focal length of a zoom lens 2 is 5-25mm, a focus adjusting range corresponding to this focal length 0.3-100m, and so on, so that the target focus adjusting range corresponding to the focal length of the lens is determined according to the attribute information of the lens and the first correspondence. **In** practical use, a correspondence between lens focus adjusting ranges and driving module travel ranges can be predetermined. For example, the focus adjusting range corresponding to the focal length of 3-10mm of the zoom lens 1 is 0.1m-30m, a travel range of the driving module corresponding thereto is 0.5-2.5mm; the focusing range corresponding to the focal length of 5-25mm of the zoom lens 2 is 0.3-100m, a travel range of the driving module corresponding thereto is 1-4.5mm.

Specifically, when the target travel range of the driving module is included in the attribute information of the lens, the target travel range of the driving module can be determined directly according to the attribute information, thereby the driving module travelling within the target travel range.

It can be seen that through the apparatus of embodiments of the present application, the target travel range of the driving module corresponding to lenses can be determined in various ways, so that the driving module is controlled to travel within the target travel range to drive the lens or the sensor to move, so that focusing is realized, so that the driving module travels only within a target travel range instead of within its overall total travel range, a moving range of the driving module is reduced and the focusing efficiency is improved.

In one possible implementation referring to Fig. 2, the apparatus as described above further includes a temperature sensor 104;

the temperature sensor 104 is configured for collecting current temperature information of the lens;

the control module 102 is specifically configured for determining a first focus adjusting range corresponding to the attribute information of the lens according to a focal length of the lens and a first correspondence; reading the current temperature information and calculating a first corrected value corresponding to an initial value of the first focus adjusting range, and a second corrected value corresponding to a cut-off value of the first focus adjusting range according to the current temperature information; calculating a first focusing position of the driving module corresponding to the first corrected value and a second focusing position of the driving module corresponding to the second corrected value, wherein the target travel range is a range determined by the first focusing position and the second focusing position.

The temperature sensor in an embodiment of the present application may be selected from various types of temperature sensors, such as thermal resistance type temperature sensor, thermocouple type temperature sensor, infrared sensors. Current temperature of the lens, or current ambient temperature in practical use, can be measured with the temperature sensor.

Specifically, the first corrected value corresponding to the initial value of the first focus adjusting range and the second corrected value corresponding to the cut-off value of the first focus adjusting range are calculated with a temperature compensation function achieved by temperature sensing. The calculation may be performed by a mapping relationship between the focusing position of the driving device (Ad value) and the object distance of the object to be imaged (D). In particular, the mapping relationship is:

$$Ad = f(D) + f(T) \qquad (1);$$

wherein in practical use, the object distance D is set according to use requirements, temperature information T is acquired by a temperature sensor, and Ad represents a focusing position of the driving module, such as a position of a motor, or a clear focusing position (corresponding to the object distance). f(D) represents an expression relative to the object distance D, and f(T) represents a functional expression in relative to temperature T. For example, a first corrected value corresponding to the initial value is Ad1 and a second corrected value corresponding to the cut-off value is Ad2. A calculation of the first focusing position of the driving module corresponding to the first corrected value and the second focusing position of the driving module corresponding to the second corrected value may be performed according to a previously acquired correspondence between the lens focus adjusting ranges and the driving module travel ranges. For example, according to a particular range of an object distance of a certain lens being within D1-D2, and D1<D2, a travel range position Ad1 of a driving module corresponding to a measured object distance D1 and a travel range position Ad2 of a driving module corresponding to a measured object distance D2 under a certain temperature T1 can be obtained. That is, a range of the travel range of the motor under the temperature T1 that meets an object distance of D1-D2 is Ad1-Ad2. A first focusing position is obtained as Ad1' and a second focusing position is obtained as Ad2' by performing a temperature compensation according to the temperature value acquired by the temperature sensor, adjusting a focus adjusting range in real time, and then calculating a range of the travel range of the motor according to the focus adjusting range. When the temperature sensor acquires a temperature change, from T1 to T2, the travel range position Ad1' of the motor of the measured object distance D1 and the travel range position Ad2' of the motor of the measured object distance D2 under the temperature T2 can be reacquired according to equation (1). That is, the range of the travel range of the motor under temperature T2 that meets the object distance of D1-D2 is Ad1'-Ad2'. The travel range of the driving module Ad1-Ad2 in the range of focusing object distance D1-D2 of the lens can be adjusted by the control module, depending on T, in real time. When the focusing is triggered, the control module controls the driving module to focus in a range of travel range under temperature T. In practical use, the range of the travel range of the driving module may be corrected with temperature, and the corrected range of the travel range is obtained, so as to achieve temperature compensation. For example, the range of the travel range of the driving module is determined with a focus adjusting range of the lens, and the range of the travel range is corrected according to the temperature measured by the temperatures sensor, so as to achieve the temperature compensation.

In practical use, correspondences between the lens focal lengths and the lens focus adjusting ranges can be predetermined in different temperature conditions, so that a focus adjusting range corresponding to a current lens focal length can be directly determined through this correspondence without a step-by-step calculation with temperature, thus a focusing efficiency is improved.

In one possible implementation, the control module is specifically configured for acquiring a pre-created third correspondence, wherein, the third correspondence includes correspondences between the focal length of the lens and the focus adjusting range at different temperature conditions; and for determining, according to the focal length of the lens, the third correspondence and a current temperature condition, a target focus adjusting range corresponding to the focal length of the lens at the current temperature condition.

For example, for a prime lens, a focal length of the lens of 25mm, the focus adjusting ranges of 1-5m and 5-10m respectively corresponding to 20°C and 30°C is predetermined. Then, the target focus adjusting range corresponding to the focal length of the lens is determined at the current temperature condition according to the focal length of the lens, the third correspondence and the current temperature. If the current temperature is 30°C, a target focus adjusting range corresponding to the prime lens can be determined as 5-10m without performing a step-by-step calculation, thus efficiency in use is improved.

For another example, for a zoom lens, a focal length of the lens of 10-25mm, the focusing ranges of 0.5-5m and 5-20m respectively corresponding to 20°C and 30°C is predetermined. Then, the target focus adjusting range corresponding to the focal length of the lens is determined at the current temperature condition according to the focal length of the lens, the third correspondence and the current temperature. If the current temperature is 30°C, a target focus adjusting range corresponding to the zoom lens can be determined as 5-20m without performing a step-by-step calculation, thus efficiency in use is improved.

Through the apparatus of embodiments of the present application, the temperature sensor measures the current temperature and the focus adjusting range of the lens is corrected according to the current temperature, and the driving module is controlled to drive the lens or sensor to travel within a corrected focus adjusting range according to the temperature, so that the influence of temperature on the focusing of the lens is eliminated and the focusing accuracy and effect is improved.

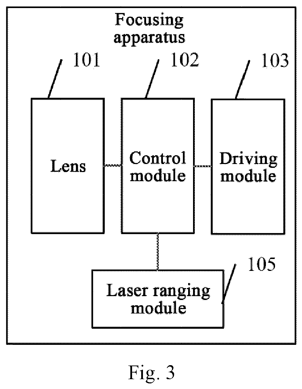

In one possible implementation, referring to Fig. 3, the apparatus as described above further includes a laser ranging module 105;

the laser ranging module 105 is configured for measuring a distance between the focusing apparatus and an object to be imaged to obtain a target object distance;

the control module 102 is further configured for determining a focusing position corresponding to the target object distance according to the target object distance and a predetermined fourth correspondence between a object distance and a focusing position of the driving module; controlling the driving module to drive the lens or the sensor to travel and to perform focusing according to the focusing position corresponding to the target object distance.

Specifically, the control module can determine an optimal focusing position of a driving module corresponding to the target object distance according to the target object distance and a predetermined fourth correspondence between a object distance and the focus adjusting position of the driving module, and further control the driving module to drive the lens or the sensor to travel and to perform focusing according to the optimal focusing position of the driving module corresponding to the target object distance. The laser ranging module in the embodiment of the present application can measure, within a focusing range of the lens, a distance between the focusing apparatus and the object to be imaged, i.e. object distance, and then perform focusing through the measured object distance, wherein the measured object distance is located within the focusing range of the lens. For example, after acquiring a measured object distance D within the focusing range of the lens of D1-D2 through the laser ranging module, a mapping relationship between the target object distance, the temperature and a position of the driving module is selected according to equation (1), a calculation is performed and finally a focusing is performed according to the optimal focusing position of the driving module corresponding to the object distance D.

Wherein the laser ranging module measures the distance between the focusing apparatus and the object to be imaged to obtain the target object distance, and then calculates the travel range position corresponding to the target object distance, so as to control the driving module to move to the travel range position, so that focusing of the object to be imaged is realized. Specifically, the focusing according to the object distance measured by the laser ranging module may be calculated and performed according to the above equation (1). Focusing in practical use can include laser focusing for a single ranging and laser focusing for a continuous ranging, specifically as seen in following embodiments.

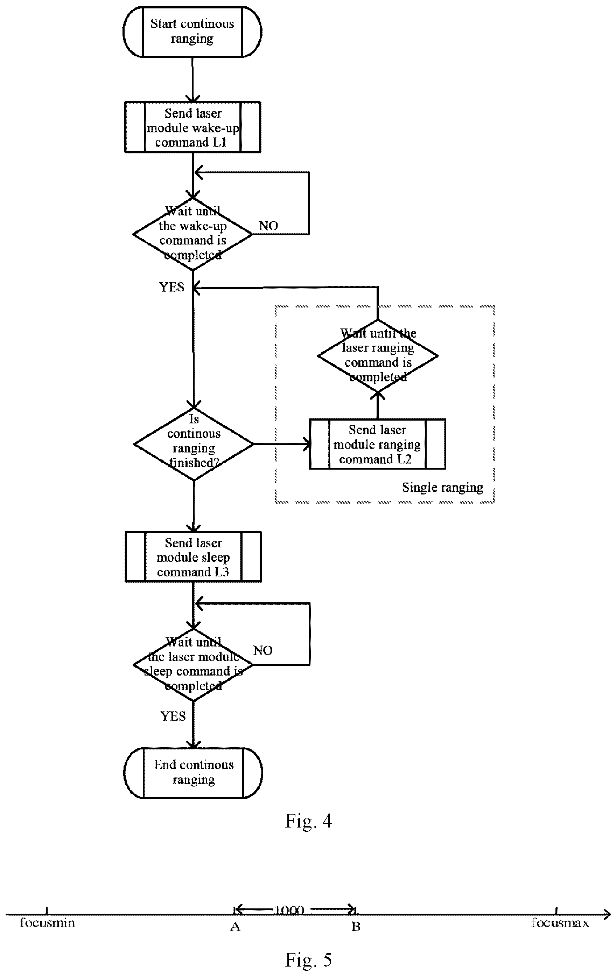

Specifically, a process of acquiring the distance by the laser module is as follows: referring to Fig. 4, after the continuous ranging starts, a laser module wake-up command L1 is sent, then waiting is applied until the wake-up command is completed, and then if it is determined that the continuous ranging is finished a laser module sleep command L3 is sent, and waiting is applied until the sleep is completed, otherwise a laser module ranging command L2 is sent and waiting is applied until the laser ranging command is completed, and then whether the ranging is finished is re-determined. Wherein after a physical button is pressed, the continuous ranging starts, and a ranging value will be updated in real time on a LCD (Liquid Crystal Display) screen. The continuous ranging is finished after the physical button is released. This part mainly includes: a master control continuously acquires ranging + display, and a soft core achieves continuous ranging.

1. The master control continuously acquires ranging + display:

    1). After the physical button is pressed, an application sends a laser turning-on command to a fpga (Field Programmable Gate Array) soft core, and the continuous acquisition of ranging value function is enabled. The ranging value is acquired once at a certain time interval (e.g. 50ms) by the application and then updating is performed on the LCD screen for displaying after the acquisition; if the acquisition of the ranging value is failed in the continuous ranging process, a pop-up box will be displayed for prompting such as "ranging fails, please retest", and an updating will not be performed on the ranging value; if the ranging value is successfully acquired, updating will be performed on the ranging value for displaying on the LCD screen.

    2). After the physical button is released, the continuous acquisition of the ranging value ends, and the ranging value is determined whether to be abnormal based on the last ranging value. If the ranging value is determined to be abnormal, the pop-up box would prompt "ranging fails, please retest", otherwise updating will be performed on the ranging value.

    3). The ranging value is continuously acquired.

2. The soft core achieves continuous ranging: after the physical button is pressed, the application firstly sends the laser turning-on command (R1) to the soft core, and the fpga soft core receives the laser turning-on command and starts the continuous ranging process;

    1). Distinguishing continuous ranging and single ranging: the continuous ranging means that after completing a single ranging, a subsequent single ranging starts immediately, and this process is repeated until the end of continuous ranging;

    2). Adding two states to the continuous ranging: a state of being under the continuous ranging and a state of not being under the continuous ranging;

3). Adding three states to the single ranging: an idle state for ranging /a state of being under a single ranging /a state where a single ranging is completed;

4). Adding three states to laser wake-up: an idle state for wake-up /a state of being waked up /a state where awake-up is completed;

5). Adding three states to laser sleep: an idle state for sleep /a state of being sleeping /a state where a sleeping is completed.

3. The ranging and laser focusing functions are separated and the whole process time of laser focusing is sped up;

1). Laser focusing process in single ranging: the physical button is pressed for single ranging. Only can the laser focusing be performed after waiting for the ranging to complete and releasing the physical button. In this process, the time of single ranging is added to the whole process of laser focusing, and a user would feel that the time of the whole laser focusing process is too long during use.

2). Laser focusing process in continuous ranging (the coordination process of continuous ranging + laser focusing): the physical button is pressed for continuous ranging. The laser focusing may be performed after waiting for the first ranging to complete and releasing the physical button. In this process, ranging is performed as the continuous ranging, the user can select a ranging target arbitrarily for continuous ranging as long as the physical button is not released, and after the user releases the physical button, the last acquired ranging result will be used as a final distance result for calculating the object distance. From the user's perspective, the ranging and laser focusing are separated into two functions by the two states where physical button is pressed and released. The laser focusing function is performed after the physical button is released. Therefore, from the perspective of user experience, the overall time of laser focusing is reduced as the ranging and laser focusing are separated (the time of laser focusing starts after the physical button is released).

In practical use, there may be a difference in travel range when the driving module moves in different directions, specifically, there may be a return travel range difference when the driving module moves towards a returning direction.

In one possible implementation, the control module 102 is specifically configured for acquiring a travel direction of the driving module; calculating a corrected target travel range by a preset return travel range difference and the target travel range when the travel direction of the driving module is opposite to a preset direction; controlling the driving module to travel within the corrected target travel range so as to drive the lens or the sensor to travel and to perform focusing, wherein the preset direction is a direction towards which the travel range of the driving module increases.

Specifically, the preset direction is the direction towards which the travel range of the driving module increases. In practical use, a zero position of a switch PI is based onand the preset direction may be a direction in which the driving module moves away from the zero position of the photoelectric switch PI.

In practical use, 1. Out of focusing resulting from the return travel range difference indicates that: in the test process of deduction of the equation (1) as described above, the test is carried out with fixing one direction for controlling (testing) the motor of the lens, i.e., a direction of focusing travel range min(Ad1)-> focusing travel range max(Ad2), or an opposite direction. Herein it is explained by taking the direction Ad1->Ad2 as an example, wherein there are two possible running directions of the motor when focusing:

1). when the current position of the motor < clear focusing position, the running direction of the motor is Ad1->Ad2;

2). when the current position of the motor > clear focusing position, the running direction of the motor is Ad2->Ad1;

In practical use, the clear focusing position calculated by the equation is consistent with an actual clear position, however, due to the return travel range difference, when the running direction of the motor is inconsistent with the preset direction, that is, when the motor runs along the direction of Ad2->Ad1, the motor will not run to the clear focusing position calculated with the equation and the effect of clear focusing is not actually achieved. It is therefore necessary to compensate the return travel range difference of the target position of the motor.

2. A method of one-time compensation for return travel range difference: the target position is calculated with the equation (1) and the return travel range difference value is subtracted therefrom as the target position, and the motor is directly controlled to run to the target position after the return travel range difference value is compensated, as the example below:

For example: according to Fig. 5, an optical test direction is the direction of Ad1->Ad2, when a clear point B is found in the direction of Ad2->Ad1 and the return travel range difference value of 1000 $\mu$m is compensated to obtain a point A, and the motor is directly controlled to run to the point A.

Calibration of the return travel range difference: there is a difference in focusing positions of a motor corresponding to clear points found in the direction of focusmin->focusmax and in the direction of focusmax->focusmin by the lens, the difference value of the two is the return travel range difference; therefore during the calibration of the lens, the motor of the lens is controlled to run in the direction of focusmin->focusmax, during which the motor position (coordinate) corresponding to the clearest point is recorded and indicated as Cor1, then the motor is controlled to run in the direction of focusmax->focusmin, during which the coordinate of the motor corresponding to the clearest point is recorded and indicated as Cor2, and an absolute value of the difference value of Cor1 and Cor2 is the return travel range difference of the lens.

Use of the calibration value (return travel range difference of a lens): after the calibration is completed and the return travel range difference value of the lens is calculated, the return travel range difference of the lens is saved in a flash of the device fpga, and the return travel range difference value of the lens is acquired each time after the device is powered on for subsequent use.

A second aspect of embodiments of the present application provides a focusing method, which applies to a control module in a focusing apparatus, the focusing apparatus includes a lens and a driving module;

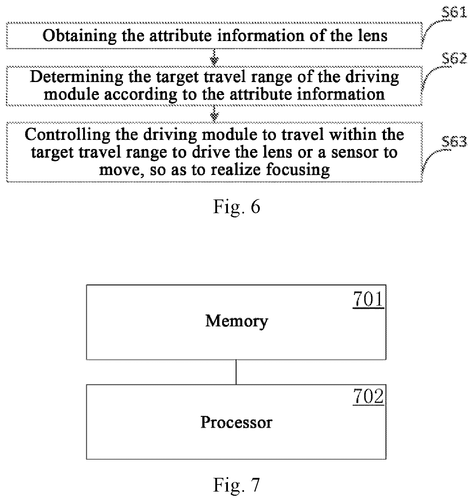

Referring to Fig. 6, the method above includes:

Step S61, acquiring attribute information of lens;

Step S62, determining a target travel range of the driving module according to the attribute information, wherein the target travel range is smaller than a total travel range of the driving module;

Step S63, controlling the driving module to travel within the target travel range to drive the lens or a sensor to travel, so that focusing is realized.

In one possible implementation, the attribute information of the lens includes a target focus adjusting range of the lens;
determining the target travel range of the driving module according to the attribute information, includes:
determining the target travel range of the driving module according to the target focus adjusting range of the lens in the attribute information, wherein the target focus adjusting range of the lens corresponds to the target travel range of the driving module.

In one possible implementation, the attribute information of the lens includes a focal length of the lens;
determining the target travel range of the driving module according to the attribute information, includes:

determining a target focus adjusting range corresponding to the focal length of the lens according to the attribute information of the lens and a first correspondence, wherein the first correspondence is a predetermined correspondence between a focal length and a focus adjusting range;

determining the target travel range of the driving module corresponding to the target focus adjusting range according to a second correspondence, wherein the second correspondence is a correspondence between lens focus adjusting ranges and travel ranges of driving modules.

In one possible implementation, the attribute information of the lens includes the target travel range of the driving module;
determining the target travel range of the driving module according to the attribute information, includes:
identifying the attribute information of the lens, to obtain the target travel range of the driving module.

In one possible implementation, the lens is provided with built-in attribute information thereof and is in communication connection with the control module;
acquiring the attribute information of the lens, includes:
acquiring the attribute information of the lens through the communication connection.

In one possible implementation, the focusing apparatus further includes a temperature sensor; the temperature sensor is configured for collecting current temperature information of the lens;
determining the target travel range of the driving module according to the attribute information, includes:

determining a first focus adjusting range corresponding to the attribute information of the lens according to the focal length of the lens and a first correspondence;

reading the current temperature information, calculating a first corrected value corresponding to an initial value of the first focus adjusting range and a second corrected value corresponding to a cut-off value of the first focus adjusting range according to the current temperature information;

calculating a first focusing position of the driving module corresponding to the first corrected value and a second focusing position of the driving module corresponding to the second corrected value, wherein the target travel range is a range determined by the first focusing position and the second focusing position.

In one possible implementation, determining the target travel range of the driving module according to the attribute information, includes:

acquiring a pre-created third correspondence, wherein, the third correspondence includes correspondences between the focal length of the lens and the focusing range at different temperature conditions;

determining, at the current temperature condition, the target focus adjusting range corresponding to the focal length of the lens, according to the focal length of the lens, the third correspondence and the current temperature condition.

In one possible implementation, the focusing apparatus further includes a laser ranging module; the laser ranging module is configured for measuring a distance between the focusing apparatus and an object to be imaged to obtain a target object distance; the method further includes:

determining a focusing position corresponding to the target object distance according to the target object distance and a predetermined fourth correspondence between the object distance and the focusing position of the driving module;

controlling the driving module to drive the lens or the sensor to travel and to perform focusing according to the focusing position corresponding to the target object distance.

In one possible implementation, controlling the driving module to travel within the target travel range to drive the lens or the sensor to travel, so that focusing is realized, includes:

acquiring a travel direction of the driving module;

calculating a corrected target travel range by a preset return travel range difference and the target travel range when the travel direction of the driving module is opposite to a preset direction;

controlling the driving module to travel in the corrected target travel range to drive the lens or the sensor to travel and to perform focusing, wherein the preset direction is a direction towards which the travel range of the driving module increases.

With methods of embodiments of the present application, the control module acquires the attribute information of the lens, determines the corresponding target travel range of the driving module according to the attribute information of the lens, and thus controls the driving module to travel within the target travel range to drive the lens or the sensor to move, so that focusing is realized. Since the driving module travels only within the target travel range instead of within its overall total travel range and the target travel range is smaller than the total travel range of the driving module, a moving range of the driving module is reduced during focusing, and the focusing efficiency is improved.

An embodiment of the present application further provides an electronic device, as shown in Fig. 7, including:

a memory 701 configured for storing a computer program;

a processor 702 configured for implementing the following steps when executing the computer program stored on the memory:

acquiring attribute information of the lens;

determining a target travel range of the driving module according to the attribute information, wherein the target travel range is smaller than a total travel range of the driving module;

controlling the driving module to travel within the target travel range to drive the lens or a sensor to move, so that focusing is realized.

The above electronic device may further include a communication bus and/or a communication interface. The processor 702, the communication interface and the memory 701 communicate with each other via the communication bus.

The communication bus mentioned with the above electronic device may be a Peripheral Component Interconnect (PCI) bus or a Extended Industry Standard Architecture (EISA) bus, etc. This communication bus may include an address bus, a data bus, a control bus and the like. For convenience of representation, this communication bus is only indicated with one thick line in figures, but it does not mean that there is only one bus or only one type of bus.

The communication interface is used for communication between the above electronic device and other devices.

The memory may include either a Random Access Memory (RAM) or a Non-Volatile memory (NVM), such as at least one disk memory. Optionally, the memory may also be at least one storage device located away from the aforementioned processor.

The above processors may be general-purpose processors, including Central Processing Unit (CPU), Network Processor (NP), etc.; it may also be a Digital Signal Processor (DSP), Application Specific Integrated Circuit (ASIC), Field-Programmable Gate Array (FPGA) or other programmable logic devices, discrete gates or transistor logic devices, discrete hardware components.

In yet another embodiment of the present application, a computer readable storage medium is further provided, which stores a computer program thereon which when executed by a processor, implements any step of the above focusing method.

In yet another embodiment of the present application, a computer program product containing instructions is further provided, which, when running on a computer, cause the computer to carry out any one of the focusing methods in the embodiments described above.

In the above embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the embodiments of the present application are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available medium. The usable media may be magnetic media (such as a floppy disk, a hard disk, a magnetic tape), optical media (such as DVD), or Solid State Disk (SSD) and the like.

It should be noted that in this article, relational terms such as first and second are only to distinguish one entity or operation from another, and do not necessarily require or imply any actual relationship or order between these entities or operations. Moreover, the terms "include", "comprise", or any other variation thereof are intended to encompass a non-exclusive inclusion, such that a process, method, article, or device that includes a series of elements not only includes those elements, but also other elements that are not explicitly listed, or also include elements inherent in such a process, method, article, or device. Without further limitations, the elements limited by the statement "comprising one..." do not exclude the existence of other identical elements in the process, method, article, or device that includes the elements.

The various embodiments in this specification are described in a relevant manner, and the same and similar parts between the various embodiments can be referred to each other, and each embodiment focuses on the differences from other embodiments. In particular, for the embodiments of method, electronic device, storage medium and computer program product, since the description is basically similar to the embodiments of apparatus, it is relatively simple, and the relevant points can be referred to the partial description of the embodiment of the method.

Embodiments as described hereinabove are only preferred embodiments of the present application and are not intended to limit the scope of protection of the application. Any modification, equivalent replacements, improvements, etc. made within the spirit and principles of the application shall be included within the scope of protection of the present application.

**Claims**

1. A focusing apparatus, comprising a lens, a control module, and a driving module;
   wherein the control module is configured for: acquiring attribute information of the lens; determining a target travel range of the driving module according to the attribute information, wherein the target travel range is smaller than a total travel range of the driving module; and controlling the driving module to travel within the target travel range to drive the lens or a sensor to move, so as to realize focusing.

2. The apparatus of claim 1, wherein, the attribute information of the lens comprises a target focus adjusting range of the lens;
   the control module is specifically configured for: determining the target travel range of the driving module according to the target focus adjusting range of the lens in the attribute information, wherein the target focus adjusting range of the lens corresponds to the target travel range of the driving module.

3. The apparatus of claim 1, wherein, the attribute information of the lens comprises a focal length of the lens;
   the control module is specifically configured for: determining a target focus adjusting range corresponding to the focal length of the lens according to the attribute information of the lens and a first correspondence, wherein the first correspondence is a predetermined correspondence between focal lengths and focus adjusting ranges; determining the target travel range of the driving module corresponding to the target focus adjusting range according to a second correspondence, wherein the second correspondence is a correspondence between the focus adjusting ranges and travel ranges of driving modules.

4. The apparatus of claim 1, wherein, the attribute information of the lens comprises the target travel range of the driving module;
   the control module is specifically configured for identifying the attribute information of the lens, to obtain the target travel range of the driving module.

5. The apparatus of claim 1, wherein, the lens is provided with built-in attribute information thereof and is in communication connection with the control module;

the control module is specifically configured for acquiring the attribute information of the lens through the communication connection.

6. The apparatus of claim 3, wherein, the apparatus further comprises a temperature sensor;

the temperature sensor is configured for collecting current temperature information of the lens; the control module is specifically configured for: determining a first focus adjusting range corresponding to the attribute information of the lens according to the focal length of the lens and the first correspondence; reading the current temperature information, calculating a corrected value corresponding to an initial value of the first focus adjusting range and a second corrected value corresponding to a cut-off value of the first focus adjusting range according to the current temperature information; calculating a first focusing position of the driving module corresponding to the first corrected value and a second focusing position of the driving module corresponding to the second corrected value, wherein the target travel range is a range determined by the first focusing position and the second focusing position.

7. The apparatus of claim 6, wherein, the control module is specifically configured for: acquiring a third correspondence which is pre-created, wherein, the third correspondence comprises correspondences between the focal lengths and the focus adjusting ranges of lenses at different temperature conditions; determining, according to the focal length of the lens, the third correspondence and a current temperature condition, the target focus adjusting range corresponding to the focal length of the lens at the current temperature condition.

8. The apparatus of claim 1, wherein, the apparatus further comprises a laser ranging module;

the laser ranging module is configured for measuring a distance between the focusing apparatus and an object to be imaged to obtain a target object distance; the control module is further configured for: determining a focusing position corresponding to the target object distance according to the target object distance and a predetermined fourth correspondence between object distances and focusing positions of the driving module; controlling the driving module to drive the lens or the sensor to travel and to perform focusing according to the focusing position corresponding to the target object distance.

9. The apparatus of claim 1, wherein, the control module is specifically configured for: acquiring a travel direction of the driving module; calculating a corrected target travel range by a preset return travel range difference and the target travel range when the travel direction of the driving module is opposite to a preset direction; controlling the driving module to travel within the corrected target travel range to drive the lens or the sensor to travel and to perform focusing, wherein the preset direction is a direction towards which a travel range of the driving module increases.

10. A focusing method, which is applied to a control module in a focusing apparatus, wherein the focusing apparatus further comprises a lens and a driving module;

the method comprises:

acquiring attribute information of the lens; determining a target travel range of the driving module according to the attribute information, wherein the target travel range is smaller than a total travel range of the driving module; controlling the driving module to travel within the target travel range to drive the lens or a sensor to move, so as to realize focusing.

11. The method of claim 10, wherein the attribute information of the lens comprises a target focus adjusting range of the lens;

determining the target travel range of the driving module according to the attribute information, comprises:

determining the target travel range of the driving module according to the target focus adjusting range of the lens in the attribute information, wherein the target focus adjusting range of the lens corresponds to the target travel range of the driving module.

12. The apparatus of claim 10, wherein the attribute information of the lens comprises a focal length of the lens;

determining the target travel range of the driving module according to the attribute information, comprises:

determining a target focus adjusting range corresponding to the focal length of the lens according to the attribute information of the lens and a first correspondence, wherein the first correspondence is a predetermined correspondence between focal lengths and focus adjusting ranges;

determining the target travel range of the driving module corresponding to the target focus adjusting range according to a second correspondence, wherein the second correspondence is a correspondence between the focus adjusting ranges and travel ranges of driving modules.

13. The method of claim 10, wherein, the attribute information of the lens comprises the target travel range of the driving module;

determining the target travel range of the driving module according to the attribute information, comprises:

identifying the attribute information of the lens, to obtain the target travel range of the driving module.

14. The method of claim 10, wherein, the lens is provided with built-in attribute information thereof and is in communication connection with the control module;

acquiring the attribute information of the lens, comprises;
acquiring the attribute information through the communication connection.

15. The method of claim 12, wherein, the focusing apparatus further comprises a temperature sensor; the temperature sensor is configured for collecting current temperature information of the lens;

determining the target travel range of the driving module according to the attribute information, comprises:

determining a first focus adjusting range corresponding to the attribute information of the lens according to the focal length of the lens and the first correspondence;
reading the current temperature information, calculating a corrected value corresponding to an initial value of the first focus adjusting range and a second corrected value corresponding to a cut-off value of the first focus adjusting range according to the current temperature information;
calculating a first focusing position of the driving module corresponding to the first corrected value and a second focusing position of the driving module corresponding to the second corrected value, wherein the target travel range is a range determined by the first focusing position and the second focusing position.

16. The method of claim 15, wherein, determining the target travel range of the driving module according to the attribute information, comprises:

acquiring a third correspondence which is pre-created, wherein, the third correspondence comprises correspondences between the focal lengths and the focus adjusting ranges of lenses at different temperature conditions;
determining, according to the focal length of the lens, the third correspondence and a current temperature condition, the target focus adjusting range corresponding to the focal length of the lens at the current temperature condition.

17. The method of claim 10, wherein, the focusing apparatus comprises a laser ranging module; the laser ranging module is configured for measuring a distance between the focusing apparatus and an object to be imaged to obtain a target object distance; the method further comprises:

determining a focusing position corresponding to the target object distance according to the target object distance and a predetermined fourth correspondence between object distances and focusing positions of the driving module;
controlling the driving module to drive the lens or the sensor to travel and to perform focusing according to the focusing position corresponding to the target object distance.

18. The method of claim 10, wherein, controlling the driving module to travel within the target travel range to drive the lens or the sensor to move, so as to realize focusing, comprises:

acquiring a travel direction of the driving module;
calculating a corrected target travel range by a preset return travel range difference and the target travel range when the travel direction of the driving module is opposite to a preset direction;
controlling the driving module to travel within the corrected target travel range to drive the lens or the sensor to travel and to perform focusing, wherein the preset direction is a direction towards which a travel range of the driving module increases.

19. An electronic device, comprising:

a memory configured for storing a computer program;
a processor configured for implementing steps of the method of any one of claims 10-18 when executing the computer program stored on the memory.

20. A computer readable storage medium, which stores a computer program thereon, which when executed by the processor, implements the method of any one of claims 10-18.

Fig. 1

Fig. 2

Fig. 3

Fig. 4

Fig. 5

Obtaining the attribute information of the lens ⟋ S61

Determining the target travel range of the driving module according to the attribute information ⟋ S62

Controlling the driving module to travel within the target travel range to drive the lens or a sensor to move, so as to realize focusing ⟋ S63

Fig. 6

701
Memory

702
Processor

Fig. 7

## INTERNATIONAL SEARCH REPORT

| International application No. |
|---|
| **PCT/CN2023/103718** |

### A. CLASSIFICATION OF SUBJECT MATTER

H04N23/60(2023.01)i

According to International Patent Classification (IPC) or to both national classification and IPC

### B. FIELDS SEARCHED

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNKI, CNTXT: 聚焦, 调焦, 对焦, 焦段, 驱动, 马达, 控制, 行程, 对应, 目标 ENTXT, WPABS: focus, range, camera, lens, driving, value, distance

### C. DOCUMENTS CONSIDERED TO BE RELEVANT

| Category* | Citation of document, with indication, where appropriate, of the relevant passages | Relevant to claim No. |
|---|---|---|
| PX | CN 115529418 A (HANGZHOU MICROIMAGE SOFTWARE CO., LTD.) 27 December 2022 (2022-12-27)<br>entire document | 1-20 |
| X | CN 111491107 A (ALIPAY (HANGZHOU) INFORMATION TECHNOLOGY CO., LTD.) 04 August 2020 (2020-08-04)<br>description, paragraphs 0014-0030 | 1-5, 8-14, 17-20 |
| A | CN 114061921 A (CHONGQING UNISINSIGHT TECHNOLOGY CO., LTD.) 18 February 2022 (2022-02-18)<br>entire document | 1-20 |
| A | CN 112649116 A (HANGZHOU HIKMICRO SENSING TECHNOLOGY CO., LTD.) 13 April 2021 (2021-04-13)<br>entire document | 1-20 |
| A | KR 101082048 B1 (LG INNOTEK CO., LTD.) 10 November 2011 (2011-11-10)<br>entire document | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 October 2023** | **16 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/103718**

| Patent document cited in search report | | | Publication date (day/month/year) | Patent family member(s) | Publication date (day/month/year) |
|---|---|---|---|---|---|
| CN | 115529418 | A | 27 December 2022 | None | |
| CN | 111491107 | A | 04 August 2020 | None | |
| CN | 114061921 | A | 18 February 2022 | None | |
| CN | 112649116 | A | 13 April 2021 | None | |
| KR | 101082048 | B1 | 10 November 2011 | None | |

Form PCT/ISA/210 (patent family annex) (July 2022)

**EP 4 607 935 A1**

**REFERENCES CITED IN THE DESCRIPTION**

**Patent documents cited in the description**

- CN 202211287250